# EUROPEAN PATENT SPECIFICATION

(11) **EP 1 230 512 B1**
(45) Date of publication and mention of the grant of the patent: **13.09.2006**
(21) Application number: 99956319.0
(22) Date of filing: 10.11.1999
(51) Int. Cl.: F17C 13/00, F17C 13/04, F17C 1/00, F16L 37/248

(54) **CARTRIDGE CONNECTING SYSTEM FOR COMBUSTIBLE GAS DISTRIBUTORS**
SOCKELPATRONENANORDNUNG FÜR BRENNGASVERTEILER
SYSTEME DE COUPLAGE DE BOUTEILLES DE GAZ POUR DISTRIBUTEURS DE GAZ COMBUSTIBLE

(43) Date of publication of application: 14.08.2002
(73) Proprietor: WALTER TOSTO SERBATOI S.p.A., 65200 Pescara (IT)
(72) Inventor: POILLUCCI, Giovanni, I-60027 Osimo (Pescara) (IT)
(74) Representative: Siniscalco, Fabio
(86) International application number: PCT/IT1999/000360
(87) International publication number: WO 2001/035015

(56) References cited:
- EP-A- 0 296 282
- WO-A-98/06629
- DE-C- 939 816
- FR-A- 2 367 982
- GB-A- 1 151 814
- GB-A- 2 319 587
- US-A- 3 029 981
- US-A- 3 704 813
- US-A- 4 006 838
- US-A- 4 331 175
- US-A- 4 635 680
- US-A- 4 682 627
- US-A- 5 305 925
- US-A- 5 330 154
- US-A- 5 413 386

## Description

The subject of the present invention is a cartridge connecting system for combustible gas distributors.

From International Application PCT WO 97/42446, for example, combustible gas distributors are known, each of which employs a plurality of single-use cartridges containing the combustible gas. Said cartridges have restricted dimensions and a limited capacity, for example of the order of a litre. The distributor comprises a plurality of connectors connected to a common manifold which is in turn connected to a delivery device; each cartridge is connected to a respective connector, and valve members of the distributor provide for enabling or otherwise the communication of one or more cartridges with the delivery device. Each connector is provided with a hollow needle which perforates the cartridge and thus permits the flow of gas from inside the cartridge to the delivery device through the valve members, or alternatively the connector comprises a hollow pin which opens a valve of the cartridge and permits the aforesaid flow of gas from the cartridge to the delivery device. Once they are exhausted, the cartridges are removed from the respective connectors and replaced by new cartridges.

In the simplest case, the distributor employs a single cartridge housed in a suitable support provided with a delivery device; the cartridge is coupled to the delivery device by way of a connector provided with a needle or pin exactly as seen above in the multi-cartridge distributors. Said simple distributor is provided, as is well known, in portable apparatuses such as, for example, gas stoves with single burner or gas lamps.

In the above-mentioned distributors with single cartridge or several cartridges, the cartridge is coupled to the connector by screwing.

However, the screw coupling is such that the user has to give several turns to the cartridge to secure it to or detach it from the connector. That is clearly laborious, especially in the case of the distributor with several cartridges.

Moreover, the length of the rotation action may cause the operator not to reach the end of the travel, so that the seal between cartridge and connector may be imperfect and the anchorage of the cartridge to the connector may be unstable.

Aim of the present invention is to remedy the aforesaid drawbacks, while at the same time a simple, constructionally economical and stress resistant cartridge connecting system be provided.

From International Application PCT WO 98/06629 and US Patent 5330154 a cartridge connecting system for combustible gas distributors is known, wherein the cartridge is detachably secured to the connector by means of a bayonet coupling.

The invention is set out in the appended claim 1 and will become clear from the following description of one of its non-limiting exemplary embodiments, in which:
Figure 1 is an exploded perspective view of a cartridge connecting system for combustible gas distributors according to the invention;
Figure 2 shows an enlarged detail of the system in Figure 1;
Figure 3 shows the detail of Figure 2 in a mounted configuration and partly in section;
Figure 4 shows according to another perspective angle, and partly in section, the bottom of the cartridge in Figure 1;
Figures 5 to 13 show, in axial section, valve members of the system in Figure 1 in various operating states.

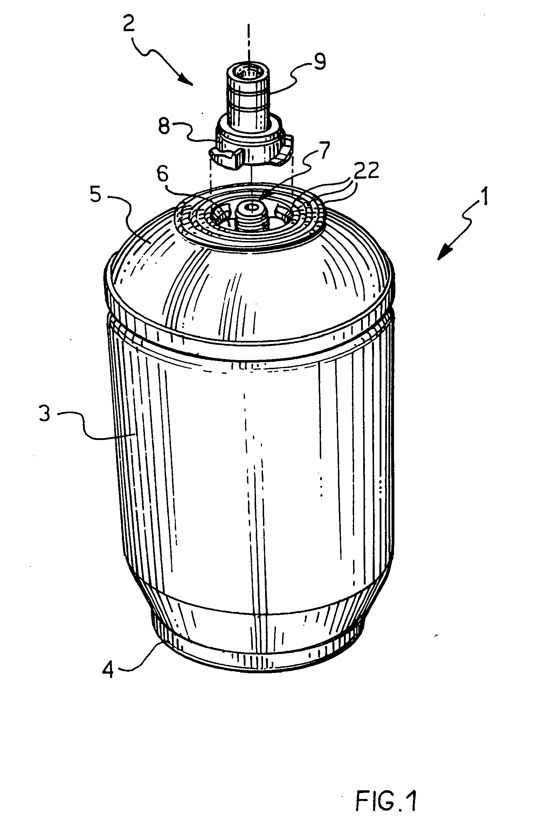

Figure 1 illustrates a cartridge 1 adapted to be charged with combustible gas and intended, together with other identical cartridges, to be used in a combustible gas distributor, not shown; in said drawing there is further illustrated a connector 2 for the cartridge 1, adapted to be incorporated in the distributor together with other identical connectors for the other cartridges.

The cartridge 1 is formed of a cylindrical container 3 with base 4 of smaller diameter and of a hemispherical dome 5 which closes the container 3 at the top. At the vertex of the dome 5 there is provided a hollowed-out cylindrical seat 6, in which is axially inserted a valve 7. Round the seat 6, in proximity thereto, a series of concentric circular ribs 22 is provided.

The connector 2 provides a hollow connecting head 8 and a hollow shank 9 which extends from the head 8. The shank 9 is internally threaded to be fixed by screwing, together with the other connectors, to a manifold of the distributor, connected in its turn to a delivery device of the latter. The head 8 is adapted to be received in the seat 6 of the cartridge 1.

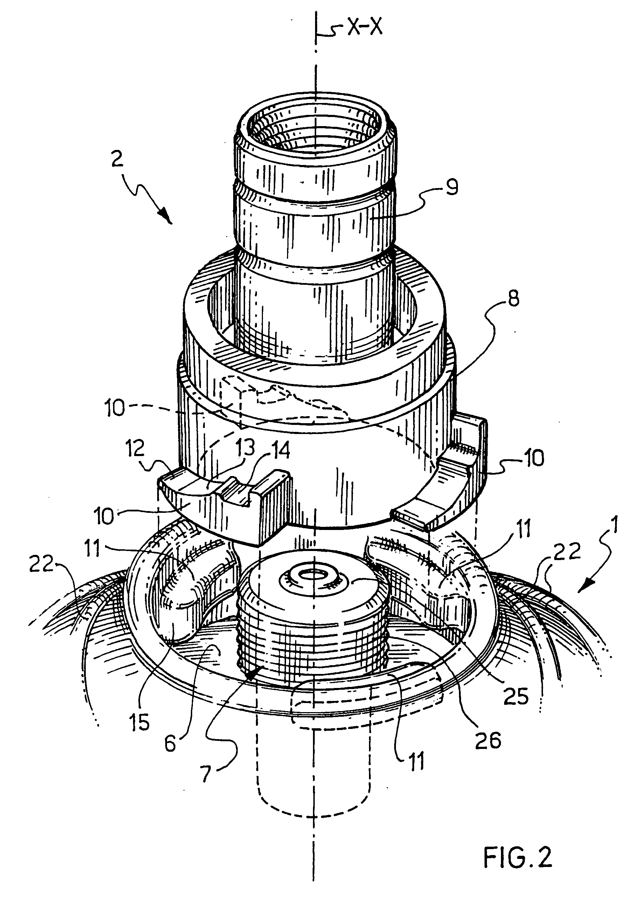

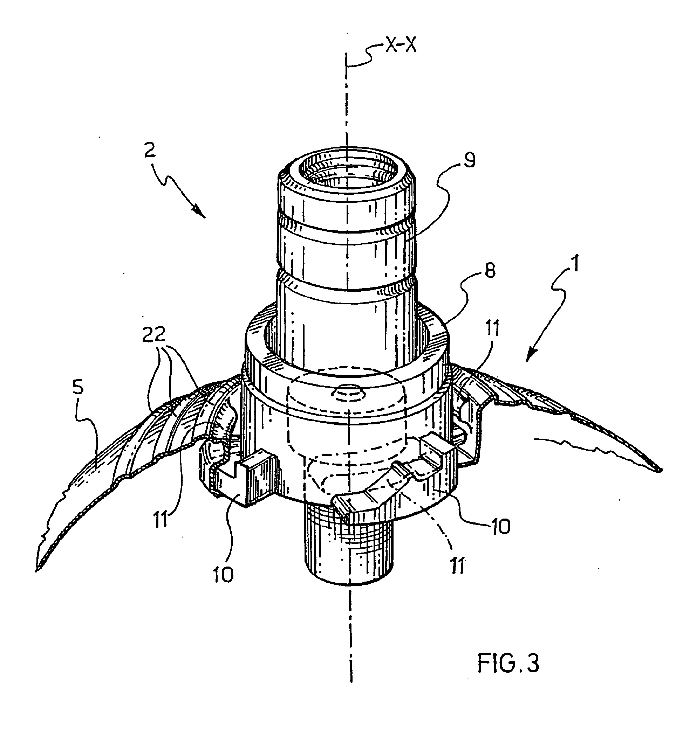

The cartridge 1 and the connector 2 are coupled by means of a bayonet coupling. To produce the bayonet coupling, as shown in detail in Figures 2 and 3, the head 8 of the connector 2 provides an annular series of projections 10 and, correspondingly, the seat 6 of the cartridge 1 has an annular series of reliefs 11, each of which couples with a respective projection 10 of the connector 2. In particular, each projection 10 of the connector 2 provides a surface for contact with a respective relief 11 of the cartridge 1, and said contact surface comprises, in succession, a first portion 12 lying substantially in a plane perpendicular to the axis X of the connector 2, a second portion 13 inclined with respect to said plane, and a third portion 14 shaped as a recess; each relief 11 of the seat 6 of the cartridge 1, on the other hand, provides a shaped engagement portion 15 adapted to be inserted into the recess portion 14.

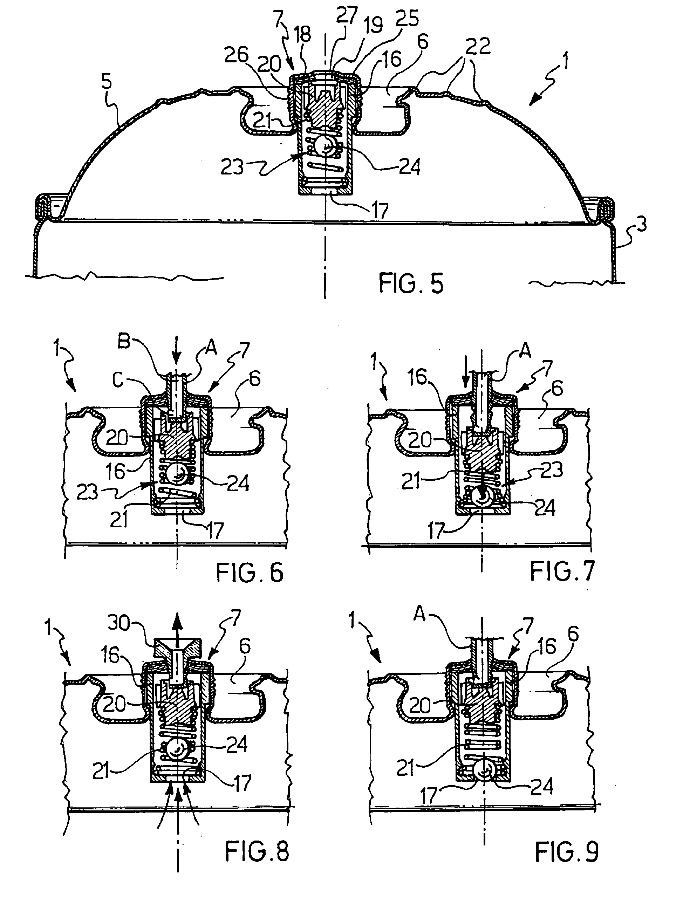

With reference to Figure 5, the valve 7 of the cartridge 1 comprises a cup-shaped body 16, the bottom of which has a hole 17 which places the inside of the cartridge in communication with the inside of said body; above, the body 16 is closed at the top by a gasket 18 having a central hole 19 which permits the access of a suitable member to the inside of the body as will be seen hereinafter. In said body 16 there is received a hollow closure means 20 held pressed against the gasket 18 by a spiral spring 21, a portion of which partly wraps round the closure means. The spring 21 has a constriction 23 in which a ball 24 is retained.

The body 16 of the valve 7 is received in a hollow cylindrical portion 25 of the dome 5, which substantially represents a sort of outer jacket of the valve itself. The portion 25 has on the outer lateral surface a thread 26 and has an upper part which locks the gasket 18 against the opening of the body 16; said upper part has a hole 27 aligned with the hole 19 of the gasket 18.

The dome 5 is rigidly connected to the container 3 by means of double seaming.

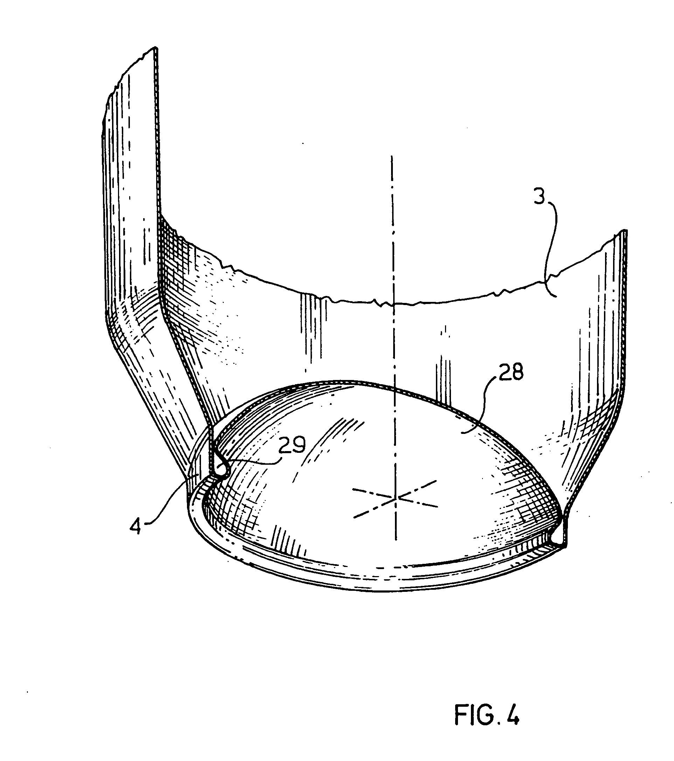

With reference to Figure 4, the bottom 28 of the container 3 has a convexity towards the inside of the container itself. Moreover, the lower edge 29 of the base 4 of the container 3 is formed into a kerb by means of suitable folding back of the connecting portion between base 4 and bottom 28.

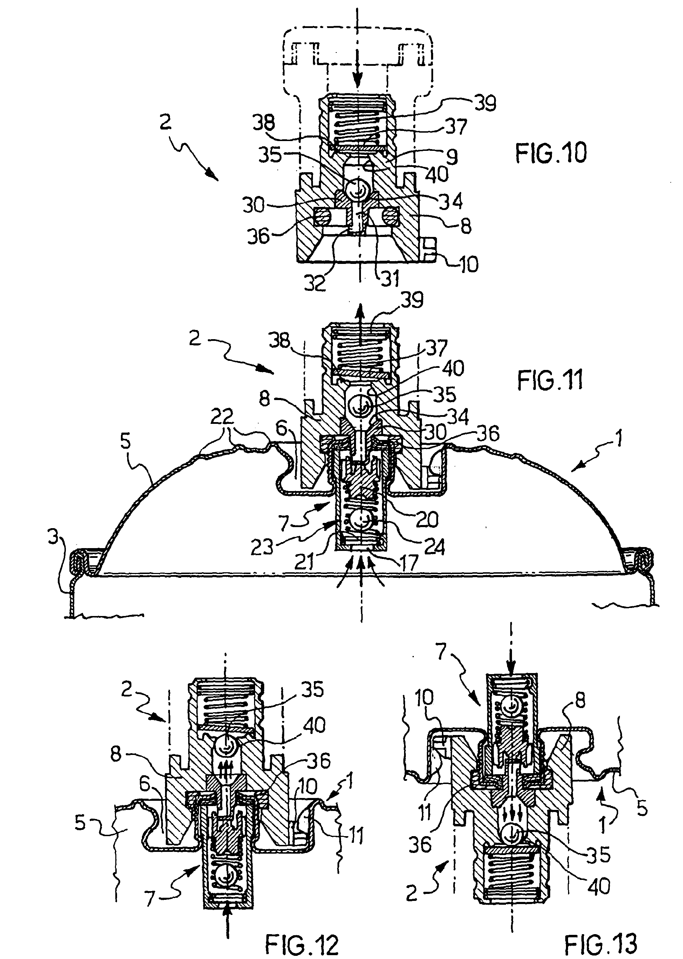

With reference to Figure 10, the connector 2 houses inside its hollow head 8 a pin 30 integral with the head itself. In the pin 30 is provided an axial conduit 31 which communicates on one side with a transverse hole 32 provided at one end of the pin and leading into the cavity of the head 8; on the other side the conduit 31 communicates with a conical seat 34 provided also in the pin and opening into the cavity of the shank 9. In the seat 34 is received a ball closure means 35. In the cavity of the head 8, at the level of the pin 30, there is housed a sealing ring 36. In the shank 9 is provided a diaphragm closure means 37 held resiliently against a seat 38 by a spiral spring 39 anchored to the inner wall of the shank. Moreover, in the shank 9, at the level of the seat 38 in an opposed position with respect to the seat 34 of the pin 30, a further conical seat 40 is provided, adapted to receive the ball 35 under certain operating conditions, as will be seen hereinafter.

The operation of the cartridge connecting system described above is as follows.

First of all, with reference to Figures 6 and 7, the combustible gas is loaded into the cartridge by means of a suitable apparatus of known type, not illustrated as a whole, which comprises a charging nozzle A having internally an axial conduit B which communicates at the end of the nozzle with a transverse hole C leading to the outside. For charging (Fig. 6), the nozzle A is inserted into the aligned holes 27 and 19 of the valve 7 of the cartridge (indicated in Fig. 5) so that said nozzle is inserted partially into the hollow closure means 20 of the valve 7 and moves it away from the position of closure of the valve 7 against the action of the spring 21. At this point, the combustible gas is caused to flow from the charging apparatus into the cartridge through the conduit B and the hole C of the nozzle A, the inside of the body 16 of the valve 7, and the hole 17 of said body. Once the cartridge is charged with combustible gas, the nozzle A is inserted further into the valve 7 until the closure means 20, pushed downwards by the nozzle, disengages the ball 24 from the constriction 23 of the spring 21 (Fig. 7). Once it is disengaged, the ball 24 moves into the hole 17, and at this point the nozzle A is extracted from the holes 19 and 27 of the valve 7 and the spring 21 returns the closure means 20 to the position of closure of said holes.

With reference to Figures 2 and 3, to connect the cartridge 1 to the connector 2, the cartridge is positioned on the connecting means so that the hollowed-out seat 6 of the cartridge is placed on the head 8 of the connecting means with the projections 10 of the head arranged on the bottom of the seat 6 of the cartridge in the spaces between the reliefs 11 of said seat. At this point the cartridge 1 is rotated in a clockwise direction about the axis X with respect to the connector 2 so that the projections 10 wedge between the reliefs 11 and the bottom of the seat 6 of the cartridge, and each relief 11 is engaged with a respective projection 10 owing to the insertion of the shaped engagement portion 15 of the relief 11 into the recess portion 14 of the projection 10 (Fig. 3). The portions 12 and 13 of the projections 10 constitute lead-in sections for the engagement. As shown in Figure 11, when the head 8 of the connector 2 enters the seat 6 of the cartridge 1, the inner pin 30 of the connector is inserted into the holes 19 and 27 of the valve 7 (indicated in Fig. 5) and moves the closure means 20 away from the hole against the action of the spring 21, said pin 30 acting like the nozzle A in the charging phase. The resilient force exerted by the spring 21 on the closure means 20 is transmitted, through the pin 30, to the connector 2 and tends to move the connector away from the cartridge 1; consequently the projections 10 and the reliefs 11 are pressed against one another by said resilient force which maintains them in said engagement position. The sizing and the arrangement of the projections 10 and of the reliefs 11 are such that the angle of rotation necessary for connecting the cartridge 1 to the connecting means 2 is about 60°.

With reference to Figures 8 and 11, once the cartridge 1 is connected to the connector 2, the combustible gas flows from the cartridge to the connecting means through the inner hole 17 of the valve 7, through the inner part of the valve itself, and then through the hole 32 and the conduit 31 (both indicated in Fig. 10) of the pin 30 of the connecting means; the ball 24 is pushed by the gas pressure against the constriction 23 of the spring 21. From the connector 2 the combustible gas flows into the distributor, lifting the ball valve 35 from its seat 34 and lifting the diaphragm valve 37 from its seat 38 against the action of the spring 39.

In the normal flow of combustible gas from the cartridge 1 to the connector 2, the ball 35 remains suspended in an intermediate position between the seat 34 and the opposed seat 40 of the connector and functions as a flow limiter.

In the event that the pressure of the combustible gas issuing from the cartridge 1 is excessive, as shown in Figure 12, the ball 35 is pushed by the actual pressure of the gas against the seat 40 of the connector 2 so as to prevent the flow of gas under over-pressure to the distributor.

In the case where the cartridge 1 and the connector 2 are accidentally turned upside down, as shown in Figure 13 the ball valve 35 fits against the seat 40, preventing the combustible gas, and in particular its liquid phase, from reaching the distributor.

As shown in Figures 11, 12 and 13, the gasket 36 is interposed between the outer jacket of the valve 7 of the cartridge 1, i.e. the cylindrical portion 25 (indicated in Fig. 5) of the dome 5, and the inner wall of the head 8 of the connector 2, so as to prevent the escape of gas to the outside when the cartridge is connected to the connector, in addition to the gasket 18.

When the cartridge 1 is discharged, for replacement it is disconnected from the connector 2 by rotation in the anti-clockwise direction of the cartridge with respect to the connector, followed by removal from the connector. The angle of anti-clockwise rotation is of course about 60°, or equal to and of opposite direction to the angle of rotation for the connection of the cartridge 1 to the connector 2. During disconnection of the cartridge from the connector, the pin 30 of the connector emerges from the valve 7 and the hollow closure means 20 returns to the valve closure position (Fig. 5).

As will be understood from Fig. 10, once the cartridge is disconnected from the connector 2, if there is pressurized combustible gas present in the distributor coming from other cartridges, this cannot escape from the connector owing to the diaphragm closure means 37 maintained by the spring 39 in the position of closure of the passage of gas inside the shank 9 of the connector. If for some reason the diaphragm closure means 37 does not provide a seal, the gas would then be blocked by the ball 35 which the actual pressure of the gas would maintain against the seat 30 of the connector, preventing communication between the inside of the shank 9 and the inside of the head 8, and therefore the escape of gas from the connector.

Once discharged, the cartridge 1 must be discarded and cannot be re-filled. As illustrated in Fig. 9, if an attempt is made to re-fill the cartridge by inserting a nozzle, still indicated by A, of a charging apparatus, the pressure of the gas which enters the valve 7 pushes the ball 24 into the hole 17 so that the latter is obstructed and the gas cannot flow inside the cartridge.

The cartridge connecting system described above has various advantages.

First of all, the connection seen between cartridge 1 and connector 2 proves to be particularly simple, rapid and efficacious in that a minimal rotating action is required for connection, and moreover the engagement between the projections 10 of the connector and the reliefs 11 of the cartridge guarantees a high stability of connection and therefore reliable sealing. Preferably, the angle of rotation for the connection of the cartridge to the connector is not more than 60°.

As can be seen, the ball closure means 35 and the diaphragm closure means 37 of the connector 2 guarantee maximum safety with the cartridge detached, preventing escapes of combustible gas from the connecting means; moreover, the ball closure means 35 guarantees further security by preventing the flow of gas under over-pressure or in liquid phase to the distributor; and finally the ball closure means 35 advantageously functions as a flow limiter.

The ball 24 of the valve 7 of the cartridge 1, as can be seen, prevents fraudulent re-filling of the discharged cartridge.

It should be added that both the structure of the cartridge 1 and the structure of the connector 2 are simple and therefore constructionally economical. In fact, the body of the cartridge 1 is formed of only two parts, i.e. the cylindrical container 3 and the dome 5; the valve 7 of the cartridge and the connector are also formed of few parts. A part of the dome 5, the hollow cylindrical portion 25 forms, as can be seen, the outer jacket of the valve 7. The other components of the valve 7 can be mounted simply in said cylindrical portion 25.

The fact that the cartridge 1 is produced in only two parts double seamed to one another makes it possible to make it very resistant to the stresses due to the pressure of the combustible gas which is loaded into it. The concentric circular ribs 22 of the dome 5 increase the robustness of the dome itself at the level of the connecting area, where the stresses are particularly accentuated. The kerbed edge 29 of the base 4 of the cartridge increases the robustness of the base itself.

The base 4 of smaller diameter allows the cartridge to be grasped and easily connected to the connector without interfering with the other adjacent cartridges mounted in the distributor.

The thread 26 of the outer jacket 25 of the valve 7 of the cartridge 1 makes it possible to connect the cartridge itself to conventional screw connectors.

It is clear that variants and/or additions to what is described and illustrated above may be provided.

The general configuration of the cartridge and of the connector may vary.

It is possible to provide bayonet coupling elements of the cartridge connecting system with functions equivalent to the elements described and illustrated above, even though the latter have proved particularly simple and reliable.

The hollow closure means 20 and the diaphragm closure means 37 may be replaced by closure means of various configurations having the same function.

The closure balls 24 and 35 may also be replaced by closure elements performing the same function, for example pistons guided in suitable seats.

The cartridge connecting system seen above may of course be applied also to a distributor provided with a single connector and therefore employing a single cartridge. Said system proves to be particularly indicated however for multi-cartridge distributors, given the rapidity of fitting the cartridges onto the connectors of the distributor.

## Claims

1. A cartridge connecting system for combustible gas distributors, wherein the connecting means (2) is connected to a delivery means of the distributor and wherein the cartridge (1) is detachably secured to the connecting means (2) by means of a bayonet coupling (6, 8, 10-15) and has a dome (5) with a seat (6) in which bayonet coupling elements (11) are provided, **characterized in that** the dome (5), the seat (6) and the bayonet coupling elements (11) are formed in one piece one with the other.

2. A cartridge connecting system according to claim 1, wherein, in order to produce said bayonet coupling, the connecting means (2) comprises a head (8) bearing an annular series of projections (10) and the seat (6) of the cartridge (1) is provided with an annular series of reliefs (11), the projections (10) and the reliefs (11) being detached from one another in one angular position of the cartridge (1) with respect to the connecting means (2), and the projections (10) and the reliefs (11) being secured axially and rotationally with respect to one another in another angular position of the cartridge (1) with respect to the connecting means (2).

3. A cartridge connecting system according to claim 2, wherein each projection (10) comprises a recess (14) and each relief (11) engages in the recess (14) in the position in which the cartridge (1) is secured to the connecting means (2).

4. A cartridge connecting system according to claim 3, wherein each projection (10) comprises in succession a first portion (12) lying substantially in a plane perpendicular to an axis (X) of the connecting means (2) about which the cartridge (1) rotates for connection, a second portion (13) inclined with respect to said plane, and a third portion (14) shaped as a recess, and wherein each relief (11) comprises an engagement portion (15) adapted to be inserted into the recess portion (14) in said securing position.

5. A cartridge adapted to be connected to a cartridge connecting system for combustible gas distributors comprising connecting means (2) connected to a delivery means of the distributor, the cartridge (1) being adapted to be detachably secured to the connecting means (2) by means of a bayonet coupling (6, 8, 10-15) and having a dome (5) with a seat (6) in which bayonet coupling elements (11) are provided, **characterized in that** the dome (5), the seat (6) and the bayonet coupling elements (11) are formed in one piece one with the other.

6. A cartridge according to claim 5, comprising, at the level of the area of connection to the connecting means (2), a valve (7) which regulates communication between the inside of the cartridge (1) and the outside, wherein the valve (7) is provided with a closure means (20) maintained resiliently in a closure position and movable from said closure position for the loading of combustible gas into the cartridge (1) or, once the cartridge (1) is connected to the connecting means (2), for the release of combustible gas towards the distributor through the connecting means (2), and wherein the valve (7) further comprises a valve element (24) that can be operatively unblocked during the first charging of combustible gas into the cartridge (1), and movable, once in operation, between a position in which it prevents the flow of gas from the outside to the inside of the cartridge (1) to prevent re-charging of gas, and a distant position in the case of reverse gas flow.

7. A cartridge according to claim 6, wherein said closure means (20) is maintained in the closure position by a spiral spring (21) and said valve element consists of a ball (24) locked in a constriction (23) of the spiral spring (21) and unlocked by the action of the displacement of the closure means (20) from the closure position.

8. A cartridge according to claim 7, wherein the displacement of the closure means (20) exerts a thrusting action on the ball (24), releasing it from the constriction (23) of the spiral spring (21).

9. A cartridge according to any one of claims 5 to 8, the structure of which comprises a container (3) closed at the top by the dome (5).

10. A cartridge according to claim 9, when dependent on any one of claims 6, 7, 8, wherein the valve (7) is inserted in the seat (6) of the dome (5).

11. A cartridge according to claim 9 or 10, wherein the dome (5) has, at the level of the connecting area, a series of concentric annular ribs (22).

12. A cartridge according to any one of claims 9, 10, 11, wherein the lower edge (29) of the base (4) of the container (3) is formed into a kerb.

13. A cartridge according to any one of claims 9 to 12, wherein the container (3) has a base (4) of smaller dimensions with respect to the remainder of the container (3).

14. A cartridge according to any one of claims 6 to 13, comprising, at the level of the valve (7), a threaded portion (26) for the connection of the cartridge (1) to a screw connecting means of a distributor.

15. A cartridge according to claim 14, wherein said threaded portion (26) is provided on the outer jacket (25) of the valve (7).

16. A cartridge connecting system according to any one of claims 1 to 4, wherein the connecting means (2) comprises a pin (30) provided for the opening of a valve (7) of the cartridge (1), permitting the flow of combustible gas from the cartridge (1) to the distributor.

17. A cartridge connecting system according to claim 16, wherein the connecting means (2) comprises a non-return valve (37, 38, 39) which prevents the flow of combustible gas from the distributor to the cartridge (1).

18. A cartridge connecting system according to claim 17, wherein said non-return valve comprises a diaphragm closure means (37) maintained resiliently in the closure position by a spiral spring (38).

19. A cartridge connecting system according to any one of claims 16 to 18, wherein the connecting means comprises a valve element (35) that is movable by the thrust of the combustible gas between a first closure position, in which it prevents the flow of gas from the distributor to the cartridge (1), and a second closure position, opposed to the first, in which it prevents the flow of gas from the cartridge (1) to the distributor in the event of over-pressure of the gas or of tipping of the connecting means (2), said valve element (35) being maintained in an intermediate position between said two closure positions in the normal conditions of flow of the gas from the cartridge (1) to the distributor.

20. A cartridge connecting system according to claim 19, wherein in said intermediate position the valve element (35) intercepts the gas, functioning as a flow limiter.

21. A cartridge connecting system according to claim 19 or 20, wherein said valve element consists of a ball (35).

22. A cartridge connecting system according to any one of claims 16 to 21, wherein a sealing gasket (36) is provided which is interposed between the cartridge (1) and the connecting means (2) when they are connected, in order to prevent escapes of combustible gas.

23. A cartridge according to claim 5, wherein, in order to produce said bayonet coupling, the connecting means (2) comprises a head (8) bearing an annular series of projections (10) and the seat (6) of the cartridge (1) is provided with an annular series of reliefs (11), the projections (10) and the reliefs (11) being detached from one another in one angular position of the cartridge (1) with respect to the connecting means (2), and the projections (10) and the reliefs (11) being secured axially and rotationally with respect to one another in another angular position of the cartridge (1) with respect to the connecting means (2).

24. A cartridge according to claim 23, wherein each projection (10) comprises a recess (14) and each relief (11) engages in the recess (14) in the position in which the cartridge (1) is secured to the connecting means (2).

25. A cartridge according to claim 24, wherein each projection (10) comprises in succession a first portion (12) lying substantially in a plane perpendicular to an axis (X) of the connecting means (2) about which the cartridge (1) rotates for connection, a second portion (13) inclined with respect to said plane, and a third portion (14) shaped as a recess, and wherein each relief (11) comprises an engagement portion (15) adapted to be inserted into the recess portion (14) in said securing position.

## Patentansprüche

1. Kartuschenverbindungssystem für Brenngas-Verteilervorrichtungen, wobei die Verbindungseinrichtung (2) mit einer Abgabeeinrichtung der Verteilervorrichtung verbunden ist und die Kartusche (1) mittels einer Bajonettkupplung (6, 8, 10-15) lösbar an der Verbindungseinrichtung (2) befestigt wird und eine Wölbung (5) mit einer Aufnahme (6) hat, in der Bajonettkupplungselemente (11) vorhanden sind, **dadurch gekennzeichnet, dass** die Wölbung (5), die Aufnahme (6) und die Bajonettkupplungselemente (11) aus einem Stück bestehen.

2. Kartuschenverbindungssystem nach Anspruch 1, wobei, um die Bajonettkupplung herzustellen, die Verbindungseinrichtung (2) einen Kopf (8) umfasst, der eine ringförmige Reihe von Vorsprüngen (10) trägt, und die Aufnahme (6) der Kartusche (1) mit einer ringförmigen Reihe von Erhöhungen (11) versehen ist, die Vorsprünge (10) und die Erhöhungen (11) in einer Winkelposition der Kartusche (11) in Bezug auf die Verbindungseinrichtung (2) voneinander gelöst sind und die Vorsprünge (10) sowie die Erhöhungen in einer anderen Winkelposition der Kartusche (1) in Bezug auf die Verbindungseinrichtung (2) axial und drehend aneinander befestigt sind.

3. Kartuschenverbindungssystem nach Anspruch 2, wobei jeder Vorsprung (10) eine Aussparung (14) umfasst und jede Erhöhung (11) in der Position, in der die Kartusche (1) an der Verbindungseinrichtung (2) befestigt ist, in die Aussparung (14) eingreift.

4. Kartuschenverbindungssystem nach Anspruch 3, wobei jeder Vorsprung (10) nacheinander einen ersten Abschnitt (12), der im Wesentlichen in einer Ebene senkrecht zu einer Achse (X) der Verbindungseinrichtung (2) liegt, um die sich die Kartusche (1) zur Verbindung dreht, einen zweiten Abschnitt (13), der in Bezug auf die Ebene geneigt ist, und einen dritten Abschnitt (14) umfasst, der als eine Aussparung geformt ist, und wobei jede Erhöhung (11) einen Eingriffsabschnitt (15) umfasst, der so eingerichtet ist, dass er in der Befestigungsposition in den Aussparungsabschnitt (14) eingeführt wird.

5. Kartusche, die so eingerichtet ist, dass sie mit einem Kartuschenverbindungssystem für Brenngas-Verteilervorrichtungen verbunden wird, das eine Verbindungseinrichtung (2) umfasst, die mit einer Abgabeeinrichtung der Verteilervorrichtung verbunden ist, wobei die Kartusche (1) so eingerichtet ist, dass sie mittels einer Bajonettkupplung (6, 8, 10-15) lösbar an der Verbindungseinrichtung (2) befestigt wird und eine Wölbung (5) mit einer Aufnahme (6) hat, in der Bajonettkupplungselemente (11) vorhanden sind, **dadurch gekennzeichnet, dass** die Wölbung (5), die Aufnahme (6) und die Bajonettkupplungselemente (11) aus einem Stück ausgebildet sind.

6. Kartusche nach Anspruch 5, die auf der Höhe des Bereiches der Verbindung mit der Verbindungseinrichtung (2) ein Ventil (7) umfasst, das Verbindung zwischen dem Inneren der Kartusche (1) und der Außenseite reguliert, wobei das Ventil (7) mit einer Verschlusseinrichtung (20) versehen ist, die federnd in einer Verschlussposition gehalten wird und aus der Verschlussposition zum Füllen von Brenngas in die Kartusche (1), oder, wenn die Kartusche (1) mit der Verbindungseinrichtung (2) verbunden ist, zur Abgabe von Brenngas in Richtung der Verteilervorrichtung über die Verbindungseinrichtung (2) bewegt werden kann, und wobei das Ventil (7) des Weiteren ein Ventilelement (24) umfasst, das während des ersten Füllens von Brenngas in die Kartusche (1) funktionell entriegelt werden kann und, wenn es in Funktion ist, zwischen einer Position, in der es den Strom von Gas von außen in das Innere der Kartusche (1) verhindert, um ein Nachfüllen von Gas zu verhindern, und, bei umgekehrtem Gasstrom, einer entfernten Position bewegt werden kann.

7. Kartusche nach Anspruch 6, wobei die Verschlusseinrichtung (20) durch eine Spiralfeder (21) in der Verschlussposition gehalten wird und das Ventilelement aus einer Kugel (24) besteht, die in einer Verengung (23) der Spiralfeder (21) arretiert ist und durch die Wirkung der Verschiebung der Verschlusseinrichtung (20) aus der Verschlussposition entarretiert wird.

8. Kartusche nach Anspruch 7, wobei die Verschiebung der Verschlusseinrichtung (20) eine Schubwirkung auf die Kugel (24) ausübt und sie aus der Verengung (23) der Spiralfeder (21) löst.

9. Kartusche nach einem der Ansprüche 5 bis 8, deren Struktur einen Behälter (3) umfasst, der an der Oberseite durch die Wölbung (5) verschlossen wird.

10. Kartusche nach Anspruch 9, wenn abhängig von einem der Ansprüche 6, 7, 8, wobei das Ventil (7) in die Aufnahme (6) der Wölbung (5) eingeführt ist.

11. Kartusche nach Anspruch 9 oder 10, wobei die Wölbung (5) auf der Höhe des Verbindungsbereiches eine Reihe konzentrischer ringförmiger Rippen (22) aufweist.

12. Kartusche nach einem der Ansprüche 9, 10, 11, wobei der untere Rand (29) des Unterteils (4) des Behälters (3) als ein Kranz ausgebildet ist.

13. Kartusche nach einem der Ansprüche 9 bis 12, wobei der Behälter (3) ein Unterteil (4) hat, das gegenüber dem Rest des Behälters (3) kleinere Abmessungen aufweist.

14. Kartusche nach einem der Ansprüche 6 bis 13, die auf der Höhe des Ventils (7) einen mit Gewinde versehenen Abschnitt (26) zur Verbindung der Kartusche (1) mit einer Schraubverbindungseinrichtung einer Verteilervorrichtung umfasst.

15. Kartusche nach Anspruch 14, wobei der mit Gewinde versehene Abschnitt (26) an der äußeren Ummantelung (25) des Ventils (7) vorhanden ist.

16. Kartuschenverbindungssystem nach einem der Ansprüche 1 bis 4, wobei die Verbindungseinrichtung (2) einen Bolzen (30) umfasst, der zum Öffnen eines Ventils (7) der Kartusche (1) vorhanden ist, um den Strom von Brenngas aus der Kartusche (1) zu der Verteilervorrichtung zu ermöglichen.

17. Kartuschenverbindungssystem nach Anspruch 16, wobei die Verbindungseinrichtung (2) ein Rückschlagventil (37, 38, 39) umfasst, das den Strom von Brenngas von der Verteilervorrichtung zu der Kartusche (1) verhindert.

18. Kartuschenverbindungssystem nach Anspruch 17, wobei das Rückschlagventil eine Membranverschlusseinrichtung (37) umfasst, die durch eine Spiralfeder (38) federnd in der Verschlussposition gehalten wird.

19. Kartuschenverbindungssystem nach einem der Ansprüche 16 bis 18, wobei die Verbindungseinrichtung ein Ventilelement (35) umfasst, das durch den Schub des Brenngases zwischen einer ersten Verschlussposition, in der es den Strom von Gas von der Verteilervorrichtung zu der Kartusche (1) verhindert, und einer der ersten gegenüberliegenden zweiten Verschlussposition bewegt werden kann, in der es den Strom von Gas aus der Kartusche (1) zu der Verteilervorrichtung beim Überdruck von Gas oder beim Kippen der Verbindungseinrichtung (2) verhindert, und das Ventilelement (35) unter normalen Umständen beim Strom des Gases aus der Kartusche (1) zu der Verteilervorrichtung in einer Mittelposition zwischen den zwei Verschlusspositionen gehalten wird.

20. Kartuschenverbindungssystem nach Anspruch 19, wobei das Ventilelement (35) in der Mittelposition dem Gas den Weg abschneidet und so als Durchflussbegrenzer dient.

21. Kartuschenverbindungssystem nach Anspruch 19 oder 20, wobei das Ventilelement aus einer Kugel (35) besteht.

22. Kartuschenverbindungssystem nach einem der Ansprüche 16 bis 21, wobei eine Dichtung (36) vorhanden ist, die zwischen der Kartusche (1) und der Verbindungseinrichtung (2) angeordnet ist, wenn sie verbunden sind, um Austritte von Brenngas zu verhindern.

23. Kartusche nach Anspruch 5, wobei, um die Bajonettkupplung herzustellen, die Verbindungseinrichtung (2) einen Kopf (8) umfasst, der eine ringförmige Reihe von Vorsprüngen (10) trägt, und die Aufnahme (6) der Kartusche (1) mit einer ringförmigen Reihe von Erhöhungen (11) versehen ist, die Vorsprünge (10) und die Erhöhungen (11) in einer Winkelposition der Kartusche (1) in Bezug auf die Verbindungseinrichtung (2) voneinander gelöst sind und die Vorsprünge (10) sowie die Erhöhungen (11) in einer anderen Winkelposition der Kartusche (1) in Bezug auf die Verbindungseinrichtung (2) axial und drehend aneinander befestigt sind.

24. Kartusche nach Anspruch 23, wobei jeder Vorsprung (10) eine Aussparung (14) umfasst und jede Erhöhung (11) in der Position, in der die Kartusche (1) an der Verbindungseinrichtung (2) befestigt ist, in die Aussparung (14) eingreift.

25. Kartusche nach Anspruch 24, wobei jeder Vorsprung (10) nacheinander einen ersten Abschnitt (12), der im Wesentlichen in einer Ebene senkrecht zu einer Achse (X) der Verbindungseinrichtung (2) liegt, um die sich die Kartusche (1) zur Verbindung dreht, einen zweiten Abschnitt (13), der in Bezug auf die Ebene geneigt ist, und einen dritten Abschnitt (14) umfasst, der als eine Aussparung geformt ist, und wobei jede Erhöhung (11) einen Eingriffsabschnitt (15) umfasst, der so eingerichtet ist, dass er in der Befestigungsposition in den Aussparungsabschnitt (14) eingeführt wird.

## Revendications

1. Système de couplage de bouteilles de gaz pour distributeurs de gaz combustible, dans lequel le moyen de couplage (2) est couplé à un moyen de distribution du distributeur et dans lequel la bouteille de gaz (1) est fixée de manière amovible au moyen de couplage (2) au moyen d'un couplage à baïonnette (6, 8, 10-15) et a une coupole (5) avec un siège (6) dans lequel des éléments de couplage à baïonnette (11) sont disposés, **caractérisé en ce que** la coupole (5), le siège (6) et les éléments de couplage à baïonnette (11) sont formés d'une pièce les uns avec les autres.

2. Système de couplage de bouteilles de gaz selon la revendication 1, dans lequel, afin de produire ledit couplage à baïonnette, le moyen de couplage (2) comprend une tête (8) portant une série annulaire de saillies (10) et le siège (6) de la bouteille de gaz (1) est muni d'une série annulaire d'évidements (11), les saillies (10) et les évidements (11) étant séparés les uns des autres dans une position angulaire de la bouteille de gaz (1) par rapport au moyen de couplage (2) et les saillies (10) et les évidements (11) étant fixés axialement et en rotation les uns par rapport aux autres dans une autre position angulaire de la bouteille de gaz (1) par rapport au moyen de couplage (2).

3. Système de couplage de bouteilles de gaz selon la revendication 2, dans lequel chaque saillie (10) comprend une cavité (14) et chaque évidement (11) s'engage dans la cavité (14) dans la position dans laquelle la bouteille de gaz (1) est fixée au moyen de couplage (2).

4. Système de couplage de bouteilles de gaz selon la revendication 3, dans lequel chaque saillie (10) comprend en succession une première partie (12) se trouvant sensiblement dans un plan perpendiculaire à un axe (X) du moyen de couplage (2) autour duquel la bouteille de gaz (1) tourne pour le couplage, une deuxième partie (13) inclinée par rapport au dit plan, et une troisième partie (14) profilée comme une cavité et dans lequel chaque évidement (11) comprend une partie d'engagement (15) adaptée pour être insérée dans la partie en cavité (14) dans ladite position de fixation.

5. Bouteille de gaz adaptée pour être couplée à un système de couplage de bouteilles de gaz pour distributeurs de gaz combustible comprenant un moyen de couplage (2) couplé à un moyen de distribution du distributeur, la bouteille de gaz (1) étant adaptée pour être fixée de manière amovible au moyen de couplage (2) au moyen d'un couplage à baïonnette (6, 8, 10-15) et ayant une coupole (5) avec un siège (6) dans lequel des éléments de couplage à baïonnette (11) sont disposés, **caractérisée en ce que** la coupole (5), le siège (6) et les éléments de couplage à baïonnette (11) sont formés d'une pièce les uns avec les autres.

6. Bouteille de gaz selon la revendication 5, comprenant, au niveau de la surface de couplage au moyen de couplage (2), une soupape (7) qui régule la communication entre l'intérieur de la bouteille de gaz (1) et l'extérieur, dans laquelle la soupape (7) est munie d'un moyen de fermeture (20) maintenu élastiquement dans une position de fermeture et déplaçable de ladite position de fermeture pour le chargement de gaz combustible dans la bouteille de gaz (1) ou, une fois que la bouteille de gaz (1) est couplée au moyen de couplage (2), pour la libération de gaz combustible vers le distributeur à travers le moyen de couplage (2), et dans laquelle la soupape (7) comprend en outre un élément de soupape (24) qui peut être débloqué fonctionnellement durant le premier chargement de gaz combustible dans la bouteille de gaz (1) et déplaçable, une fois en service, entre une position dans laquelle il empêche le flux de gaz de l'extérieur à l'intérieur de la bouteille de gaz (1) pour empêcher la recharge de gaz et une position éloignée dans le cas de flux de gaz inversé.

7. Bouteille de gaz selon la revendication 6, dans laquelle ledit moyen de fermeture (20) est maintenu dans la position de fermeture par un ressort spiral (21) et ledit élément de soupape comprend une bille (24) bloquée dans un resserrement (23) du ressort spiral (21) et débloquée par l'action du déplacement du moyen de fermeture (20) à partir de la position de fermeture.

8. Bouteille de gaz selon la revendication 7, dans laquelle le déplacement du moyen de fermeture (20) exerce une action de poussée sur la bille (24), en la libérant du resserrement (23) du ressort spiral (21).

9. Bouteille de gaz selon l'une quelconque des revendications 5 à 8, dont la structure comprend un récipient (3) fermé au sommet par la coupole (5).

10. Bouteille de gaz selon la revendication 9, quand elle est indépendante de l'une quelconque des revendications 6, 7, 8, dans laquelle la soupape (7) est insérée dans le siège (6) de la coupole (5).

11. Bouteille de gaz selon la revendication 9 ou 10, dans laquelle la coupole (5) a, au niveau de la surface de couplage, une série de nervures annulaires concentriques (22).

12. Bouteille de gaz selon l'une quelconque des revendications 9, 10, 11, dans laquelle le bord inférieur (29) de la base (4) du récipient (3) est formée en une bordure.

13. Bouteille de gaz selon l'une quelconque des revendications 9 à 12, dans laquelle le récipient (3) a une base (4) de dimensions inférieures par rapport au reste du récipient (3).

14. Bouteille de gaz selon l'une quelconque des revendications 6 à 13, comprenant, au niveau de la soupape (7), une partie filetée (26) pour le couplage de la bouteille de gaz (1) à un moyen de couplage par vissage d'un distributeur.

15. Bouteille de gaz selon la revendication 14, dans laquelle ladite partie filetée (26) est disposée sur une chemise externe (25) de la soupape (7).

16. Système de couplage de bouteilles de gaz selon l'une quelconque des revendications 1 à 4, dans lequel le moyen de couplage (2) comprend une goupille (30) agencée pour l'ouverture d'une soupape (7) de la bouteille de gaz (1), permettant le flux de gaz combustible de la bouteille de gaz (1) au distributeur.

17. Système de couplage de bouteilles de gaz selon la revendication 16, dans lequel le moyen de couplage (2) comprend une soupape de retenue (37, 38, 39) qui empêche le flux de gaz combustible du distributeur à la bouteille de gaz (1).

18. Système de couplage de bouteilles de gaz selon la revendication 17, dans lequel ladite soupape de retenue comprend un moyen de fermeture à diaphragme (37) maintenu élastiquement dans la position de fermeture par un ressort spiral (38).

19. Système de couplage de bouteilles de gaz selon l'une quelconque des revendications 16 à 18, dans lequel le moyen de couplage comprend un élément de soupape (35) qui est déplaçable par la poussée du gaz combustible entre une première position de fermeture, dans laquelle elle empêche le flux de gaz combustible du distributeur à la bouteille de gaz (1), et une deuxième position de fermeture, opposée à la première, dans laquelle elle empêche le flux de gaz combustible de la bouteille de gaz (1) au distributeur dans le cas d'une surpression du gaz ou de basculement du moyen de couplage (2), ledit élément de soupape (35) étant maintenu dans une position intermédiaire entre lesdites deux positions de fermeture dans les conditions normales de flux du gaz de la bouteille de gaz (1) au distributeur.

20. Système de couplage de bouteilles de gaz selon la revendication 19, dans lequel, dans ladite position intermédiaire, l'élément de soupape (35) intercepte le gaz, en fonctionnant comme un limiteur de débit.

21. Système de couplage de bouteilles de gaz selon la revendication 19 ou 20, dans lequel ledit élément de soupape comprend une bille (35).

22. Système de couplage de bouteilles de gaz selon l'une quelconque des revendications 16 à 21, dans lequel une garniture d'étanchéité (36) est disposée, laquelle est interposée entre la bouteille de gaz (1) et le moyen de couplage (2) quand ils sont accouplés, de manière à empêcher des fuites de gaz combustible.

23. Système de couplage de bouteilles de gaz selon la revendication 5, dans lequel, afin de produire ledit couplage à baïonnette, le moyen de couplage (2) comprend une tête (8) portant une série annulaire de saillies (10) et le siège (6) de la bouteille de gaz (1) est muni d'une série annulaire d'évidements (11), les saillies (10) et les évidements (11) étant séparés les uns des autres dans une position angulaire de la bouteille de gaz (1) par rapport au moyen de couplage (2) et les saillies (10) et les évidements (11) étant fixés axialement et en rotation les uns par rapport aux autres dans une autre position angulaire de la bouteille de gaz (1) par rapport au moyen de couplage (2).

24. Système de couplage de bouteilles de gaz selon la revendication 23, dans lequel chaque saillie (10) comprend une cavité (14) et chaque évidement (11) s'engage dans la cavité (14) dans la position dans laquelle la bouteille de gaz (1) est fixée au moyen de couplage (2).

25. Système de couplage de bouteilles de gaz selon la revendication 24, dans lequel chaque saillie (10) comprend en succession une première partie (12) se trouvant sensiblement dans un plan perpendiculaire à un axe (X) du moyen de couplage (2) autour duquel la bouteille de gaz (1) tourne pour le couplage, une deuxième partie (13) inclinée par rapport au dit plan, et une troisième partie (14) profilée comme une cavité et dans lequel chaque évidement (11) comprend une partie d'engagement (15) adaptée pour être insérée dans la partie en cavité (14) dans ladite position de fixation.
